Europäisches Patentamt

European Patent Office

Office européen des brevets

(19)

(11) EP 0 601 403 B1

(12) EUROPÄISCHE PATENTSCHRIFT

(45) Veröffentlichungstag und Bekanntmachung des Hinweises auf die Patenterteilung:
29.10.1997 Patentblatt 1997/44

(51) Int Cl.⁶: C08B 11/193, D06P 1/50

(21) Anmeldenummer: 93118985.6

(22) Anmeldetag: 25.11.1993

(54) **Verfahren zur Herstellung hochsubstituierten Carboxymethyl-sulfoethylcelluloseether und deren Verwendung in Textildruckfarbpasten**

Process for the preparation of highly substituted carboxymethyl sulfoethyl cellulose ether and its use in printing paste for textile

Procédé de préparation d'ether carboxyméthyl sulpho-éthyl de cellulose hautement substitué et son utilisation dans des pâtes d'impression pour matières textiles

(84) Benannte Vertragsstaaten:
AT BE DE FR IT NL SE

(30) Priorität: 08.12.1992 DE 4241286

(43) Veröffentlichungstag der Anmeldung:
15.06.1994 Patentblatt 1994/24

(73) Patentinhaber: WOLFF WALSRODE AKTIENGESELLSCHAFT
D-29699 Walsrode (DE)

(72) Erfinder:
• Kiesewetter, René, Dr.
  D-29614 Soltau-Ahlften (DE)
• Kniewske, Reinhard, Dr.
  D-29683 Fallingbostel (DE)
• Reinhardt, Eugen
  D-29664 Walsrode (DE)
• Szablikowski, Klaus, Dr.
  D-29664 Walsrode (DE)

(74) Vertreter: Braun, Rolf, Dr. et al
Bayer AG
Konzernbereich RP
Patente und Lizenzen
51368 Leverkusen (DE)

(56) Entgegenhaltungen:
EP-A- 0 319 865          EP-A- 0 319 867

• DATABASE WPI Week 7412, Derwent Publications Ltd., London, GB; AN 21656V & JP-A-48 027 985 (SANYO KOKISAKU PULP CO) 13. April 1973
• DATABASE WPI Week 8149, Derwent Publications Ltd., London, GB; AN 90525D GANDURIN L I & SU-A-794 098 (CHEM FIBRE PROC RES)
• DATABASE WPI Week 8450, Derwent Publications Ltd., London, GB; AN 309181 & JP-A-59 192 786 (SANYO KOKUSAKU PULP) 1. November 1984
• PATENT ABSTRACTS OF JAPAN vol. 12, no. 462 (C-549)5. Dezember 1988 & JP-A-63 182 301 (DAI ICHI KOGYO SEIYAKU CO)

**Beschreibung**

Die vorliegende Erfindung betrifft nach einem zweistufigen Verfahren hergestellte Carboxymethylsulfoethylcelluloseether (CMSEC), sowie deren Verwendung als Verdickungsmittel in Textildruckfarbpasten.

Unter einer Druckfarbe (Druckpaste) wird eine fertige, zum Drucken geeignete Kombination eines Farbstoffes mit zum Druck notwendigen weiteren Komponenten verstanden. An solchen Komponenten ist in erster Linie das Verdickkungsmittel zu nennen, das der Druckfarbe eine für den Druck geeignete Viskosität verleihen soll, da dünnflüssige, wäßrige Farbstofflösungen zum Auslaufen neigen und die Konturen des Musters daher nicht scharf eingehalten werden können. Ferner übernimmt das Verdickungsmittel in der Druckpaste Schutzkolloid- und Schutzfilmfunktionen, reguliert den Feuchtigkeitshaushalt der Druckpaste und beeinflußt damit nachhaltig die Farbausbeute (B. Habereder, F. Beierlein in: Handbuch der Textilhilfsmittel; Herausgeber: A. Chwala, V. Anger, Verlag Chemie, Weinheim, 1977, Seite 621). Daraus ergeben sich eine Reihe von Anforderungen, die an Verdickungsmittel bzw. Verdickungen gestellt werden:

Verdickungen müssen mit den entsprechenden Farbstoffen verträglich sein und dürfen nicht mit ihnen reagieren. Reaktivfarbstoffe besitzen z.B. solche reaktionsfähigen Gruppen, die unter den Färbebedingungen mit dem Substrat in Gegenwart von Alkalien reagieren und den Farbstoff über eine kovalente Bindung fixieren (H. Zollinger, Angew. Chem., $\underline{73}$, 125 [1961]). Verdickungsmittel, die einen ähnlichen Aufbau wie das zu färbende Substrat besitzen, sind daher normalerweise ungeeignet.

Um fehlerhafte Drucke, die durch Verstopfungen der Schablonen, Gaze oder Rotationsschablonen entstehen könnten, zu vermeiden, müssen die Verdickungen vollkommen faser- und gelkörperfrei sein.

Verdickungsmittel und die daraus hergestellten Verdickungen sollen gut lagerfähig sein. Der Zusatz von Konservierungsmitteln ist dabei als nachteilig anzusehen.

Zur Vermeidung schlechter Druckqualitäten, Griffverhärtungen der bedruckten Stellen sowie zeit- und kostenintensiver Nachbehandlungsprozesse soll das Verdickungsmittel durch eine einfache Nachbehandlung des Druckes aus der Ware entfernbar sein.

Verdickungen sollen leicht verfügbar, standardisiert lieferbar und so billig wie möglich sein, da sie dem Textilmaterial keinen höheren Wert verleihen, sondern wieder ausgewaschen werden.

Von der Vielzahl der im Textildruck eingesetzten Verdickungsmittel stellen Alginate den weitaus größten Teil dar (Ciba-Rundschau, Nr. 1, 19-34 [1969]). Die im allgemeinen, in Konzentrationen von 3 bis 4 % eingesetzten Alkalisalze der Alginsäuren besitzen den Vorteil, daß sie sehr gut auswaschbar sind. Alginate sind mit einer Reihe von Farbstoffen verträglich und im Bereich von pH 5 bis 10 weitgehend stabil. Bei höheren pH-Werten werden transeliminative Depolymerisationen beobachtet (A. Hang et al., Acta Chem. Scand., $\underline{21}$, 2859 [1967]). Bekanntlich sind Alkalialginate unverträglich mit Schwermetallsalzen, Calcium- und Aluminiumverbindungen, was wiederum den Einsatz von Komplexbildnern erforderlich macht. Als Biopolymer wird Alginat leicht durch Mikroorganismen abgebaut. Ungeschützte Verdickungen halten sich in der Regel nur 1 bis 2 Tage, so daß den Verdickungen Konservierungsmittel, wie z.B. Formaldehydlösungen bzw. Phenole hinzugesetzt werden müssen.

Für den Einsatz von Verdickungen im Textildruck in wärmeren Regionen ist eine sehr gute Temperaturstabilität der Verdickungsmittel erforderlich. Bei der Verwendung von Alginaten kann es hierbei zu quantitativen Decarboxylierungen kommen. Arbeits- und kostenintensive Verfahren zur Extraktion der aus anfallendem Seetang gewonnenen Alginate spiegeln sich in hohen Preisen wider, so daß nach preisgünstigen Ersatzmöglichkeiten gesucht wird.

Von den im Textildruck verwendeten Verdickungsmitteln sind darüber hinaus Xanthane, Emulsionsverdickungen und synthetische Polymerisat-Verdickungsmittel von Bedeutung, die jedoch alle eine Reihe von Nachteilen aufweisen, so daß die gewünschten Effekte nicht mit einem einzigen Verdickungsmittel allein erreicht werden können. So ist z.B. der Druck mit Emulsionsverdickungen aus Preis- und Ökologiegründen stark rückläufig. Xanthane weisen neben ihren hohen Kosten ungenügende Stabilitäten gegenüber mikrobiellem Abbau auf. Polymerisatverdicker sind extrem elektrolytempfindlich, was sie besonders anfällig gegenüber hartem Wasser, anionischen Farbstoffen und Stellmittelsalzen macht.

In den letzten Jahren wurden verstärkt Polysaccharide, insbesondere Natriumcarboxymethylcellulosen (Na-CMC) allein oder als Compoundierung, als Verdickungsmittel im Textildruck eingesetzt (EP-A 0 106 228, DD 158 403, SU 1 320 305-A, J 60 215 881-A, J 60 052 685-A, J 60 039 491-A, DE 3 246 676-A, J 57 061 780, DD 148 342, US-PS 4,063,018). Die kommerziell erhältlichen Natriumcarboxymethylcellulosen weisen in der Regel Substitutionsgrade (DS-Werte) von 0,4 bis 1,2 auf (G.I. Stelzer, E.D. Klug in: Handbook of Water Soluble Gums and Resins, Herausgeber: R. L. Davidson, McGraw Hill, New York, 1980, Seite 4-1). Aufgrund des niedrigen Substitutionsgrades führt der Einsatz als Verdickungsmittel jedoch zu Reaktionen mit dem Reaktivfarbstoff. Die so inaktivierten Reaktivfarbstoffe werden häufig in das Substrat eingelagert (P. Bajaj et al. in: J. Macromol. Sci. Rev. Macromol. Chem., 1984, C 24 (3), 387 ff). Es resultieren schlechte Farbausbeuten und Griffverhärtungen. Die nicht kovalent gebundenen Farbstoffanteile müssen daher, um gute Naßechtheiten zu erzielen, durch intensive und aufwendige Waschoperationen abgetrennt werden.

Um eine mögliche Reaktion zwischen dem Verdickungsmittel und dem Reaktivfarbstoff zu vermeiden, werden daher Spezialitäten mit Substitutionsgraden (DS) um bzw. deutlich über 2,0 eingesetzt (DE 3 208 430, US-PS 4,426,518, J 62 177 287-A, J 58 197 383-A).

Die durch mehrstufige Fahrweise nahezu vollständig veretherten Produkte führen zu einem deutlich verbesserten anwendungstechnischen Eigenschaftsprofil. Die Herstellung solcher hochsubstituierten Produkte, wie sie z.B. in US-PS 4,426.518 beschrieben wird, erfordert jedoch eine mehrfache Wiederholung des Alkalisierungs- und Veretherungsschrittes, wobei über alle Stufen betrachtet, sehr schlechte Substitutionsausbeuten resultieren, was obendrein komplexe und kostenintensive Herstellungsverfahren notwendig macht (siehe z.B. M.U. Mahmud, Acta Polym., 38 (1987) (3), 172; R.R. McLaughlin, J.H. E. Herbst, Can. J. Res., 28 B (1950) 731; K. Engelskirchen, in Houben-Weyls "Makromolekulare Stoffe", Band E 20/III, Georg-Thieme-Verlag, Stuttgart, 1987, Seite 2072 ff).

Allen Carboxymethylcelluloselösungen ist ihre schlechte Salzstabilität, insbesondere gegenüber mehrwertigen Kationen (z.B. Calciumionen), gemein. Beim Auswaschen des bedruckten Textilgewebes mit hartem Wasser kann es daher zu unerwünschten Ausfällungen des Verdickungsmittels auf der Faser kommen.

Aufgabe der vorliegenden Erfindung war es, ein verbessertes Cellulosederivat als Verdickungs-, Dispergier- oder Bindemittel bzw. Rheologieverbesserer für die Textilindustrie, insbesondere für den Textildruck, bereitzustellen. Das Produkt sollte ausgezeichnete Lösungsqualitäten und gegenüber dem Stand der Technik (Alginat, CMC) deutlich verbesserte Elektrolytstabilitäten besitzen. Ferner sollte ein einfaches und vor allem ökonomisches Verfahren zur Herstellung des obengenannten Cellulosederivates, insbesondere zur Herstellung einer Carboxymethyl-Sulfoethylcellulose (CMSEC), mit einem Gesamtsubstitutionsgrad von <2,2 aufgezeigt werden. Hierbei sollten die drucktechnischen Nachteile der zur Zeit im Textildruck eingesetzten Verdickungsmittel - insbesondere die bei niedrigsubstituierten CMCs auftretende Griffverhärtung - vermieden werden.

Hinsichtlich der Ergiebigkeit und den Eigenschaften beim Drucken sollte das Produkt vergleichbar oder besser als Alginat sein.

Überraschenderweise wurde gefunden, daß Carboxymethylsulfoethylcellulosederivate mit Substitutionsgraden zwischen 1,4 und 2,2, speziell zwischen 1,5 und 2,1, die Nachteile des Standes der Technik überwinden.

Ionische Cellulosemischether, die einen Sulfoalkyl-, insbesondere Sulfoethylsubstituenten tragen, werden in der Patentliteratur beschrieben.

Entsprechend US-A 2,132,181 wird ein Verfahren zur Herstellung von Polysaccharid-Verbindungen beansprucht. Die ionischen Cellulosemischether werden in mehreren Stufen hergestellt, wobei die Alkalisierung in einem ersten Schritt durchgeführt wird (Maischalkalisierung). Die sich daran anschließende Veretherung mit Natriumvinylsulfonat und Methylchlorid, Ethylchlorid, Ethylenoxid oder Chloressigsäure wird in einer bzw. zwei Stufen vorgenommen. Die Umsetzung mit Natrium-Vinylsulfonat erfolgt vorzugsweise im Kneter bei etwa 60°C. Bei diesem Verfahren wird mit extremen Überschüssen an Lauge gearbeitet, was einerseits zu erheblichen Nebenreaktionen führt und andererseits die Herstellung dieser Produkte äußerst unwirtschaftlich macht. Darüber hinaus sind Umsetzungen im Laborkneter erfahrungsgemäß mit überaus schlechten Lösungsqualitäten, d.h. hohen Faser- und Gelkörperanteilen verbunden. Angaben zur Qualität der Produkte, zum Substitutionsgrad und zur Viskosität der Lösungen werden nicht gemacht.

Bei den in DE-OS 3 147 434, DE-A 3 306 621, DE-OS 3 316 124 und DE-OS 3 417 952 beschriebenen wasserlöslichen Cellulosemischethern werden u.a. ionische Methylcellulosemischether mit Carboxyalkyl-, Sulfonoalkyl- sowie Phosphonoalkylgruppen beschrieben. Die in ihrer Viskosität, ihrem Substitutionsgrad, ihrer Ausbeute und ihrer Lösungsqualität nicht näher bezeichneten Produkte werden entweder in Dimethylether bzw. Dimethoxyethan allein oder im Gemisch mit Alkanolen, Alkandiolen und/oder Alkoxyalkanolen hergestellt.

Die Herstellung von Carboxymethylsulfoethylcelluloseethern mit Viskositäten von 5 bis 60 000 mPa·s, sehr guten Lösungsqualitäten und Gesamtsubstitutionsgraden von ≤2,8 ($DS_{Sulfoethyl}$ = 0,15 bis 0,3; $DS_{Carboxymethyl}$ = 0,25 bis 2,5) ist aus US-A 2,811,519 bekannt. Die Veretherung erfolgt bevorzugt durch gleichzeitige Zugabe von carboxy- und sulfoethylgruppenübertragenden Reagenzien. Ziel dabei ist es, Produkte mit sehr guter Salz- und Säurestabilität in einem kostengünstigen Verfahren bereitzustellen. Die beispielhaft aufgeführten CMSEC's werden durch sehr gute Lösungs-, Salz- und Säurestabilitäten charakterisiert, zeigen jedoch, verfahrensbedingt, extrem niedrige Viskositäten. Die niedrigsubstituierten Produkte weisen Gesamtsubstitutionsgrade von deutlich unter 1,0 auf, was mit der literaturbekannten Tatsache einhergeht, wonach bei Carboxymethylierungen bei einstufig durchgeführten Veretherungsprozessen in der Regel nur Substitutionsgrade bis ca. 1,0 relativ problemlos erhältlich sind (siehe hierzu z.B. K. Engelskirchen in: Houben-Weyls "Makromolekulare Stoffe", Band E 20/III, Seite 2074, Herausgeber A. Barth und J. Falbe, Georg-Thieme-Verlag, Stuttgart/New York, 1987).

In der japanischen Offenlegungsschrift Sho 63-182301 wird ein Verfahren zur Herstellung einer CMSEC beschrieben, wobei die Herstellung im Eintopfverfahren, mit Sulfoethylierung in der ersten und Carboxymethylierung in der zweiten Reaktionssequenz, mit sich daran anschließender Reinigung vorgenommen wird. Das Produkt wird durch einen Sulfoethylsubstitutionsgrad von 0,4 bis 1,0 und einen Carboxymethylsubstitutionsgrad von 0,2 bis 1,0 charakterisiert und weist eine ausgezeichnete Elektrolytstabilität auf. Es ist als Hilfsmittel für die Erschließung von Erdöllagerstätten einsetzbar.

Die nach DE-OS 3 742 106 dargestellten CMSEC's besitzen Transmissionen in 2 gew.-%iger Lösung von T >95 % (λ = 550 nm, optische Weglänge der Küvette = 10 mm). Der mittlere Gesamtsubstitutionsgrad genügt der Formel:

$$0{,}5 \leq DS_{Sulfoethyl} + DS_{Carboxymethyl} \leq 1{,}6$$

$$(DS_{Sulfoethyl} = 0{,}1 - 1; \ DS_{Carboxymethyl} = 0{,}3 - 1{,}2)$$

Die Produkte sind als Verdicker oder Wasserrückhalter in den Bereichen Erdöl, Baustoffe sowie als Verdicker oder Stabilisatoren von Wasch- und Reinigungsmitteln und Kosmetika einsetzbar. Des weiteren ist die CMSEC als Dispergier- und Suspendiermittel sowie als Hilfsmittel und Viskositätsbildner in wäßrigen Systemen, wie z.B. als Stabilisator, Dispergier- und Suspendiermittel bei Emulsions- und Suspensionspolymerisationen geeignet.

In SU 794 098 ist die Verwendung von CMSEC zum Bedrucken von Textilmaterial aus Acetat- oder Viskosefasern, natürlichen oder synthetischen Polyamidfasern beschrieben. Es wird dort die Verwendung von CMSEC mit einem $DS_{Carboxymethyl}$ von 0,4 bis 0,55 und einem $DS_{Sulfoethyl}$ von 0,1 bis 0,25 als Viskositätsbildner in Textildruckfarben beansprucht. Die Lösungsqualität dieser hier beschriebenen CMSEC ist jedoch außerordentlich schlecht: Die Transmission einer 0,5 %igen wäßrigen Lösung liegt lediglich bei 89,5 %; was auf einen hohen Gel- und vor allem Faseranteil schließen läßt. Derartige Produkte führen sehr schnell zu Verstopfungen der Schablonen, Gaze oder Rotationsschablonen und damit zu fehlerhaften Drucken.

In der Offenlegungsschrift DE-OS 3 742 104 wird ein Eintopfverfahren zur Herstellung von Sulfoethylcellulosen mit hervorragenden Lösungsqualitäten beschrieben. Der durchschnittliche Substitutionsgrad (DS) liegt hierbei im Bereich von DS = 0,4 bis 1,4. Die Produkte finden Anwendung in Streich- und Spritzfarben und kosmetischen Zubereitungen.

Das erfindungsgemäß beanspruchte einfache und kostengünstige Herstellungsverfahren für eine CMSEC führt zu Produkten, die bei gegenüber dem Stand der Technik deutlich niedrigeren Gesamtsubstitutionsgraden im Textildruck gegenüber den herkömmlich eingesetzten Produkten (Alginat, CMC) verbesserte drucktechnische Ergebnisse aufweisen.

Überraschenderweise wurde gefunden, daß Carboxymethylsulfoethylcellulose mit Substitutionsgraden zwischen 1,4 und 2,2, speziell zwischen 1,5 und 2,1, die Nachteile des Standes der Technik überwindet, sofern das Produkt wie folgt hergestellt wird:

1. Herstellung einer Carboxymethylcellulose (CMC), Sulfoethylcellulose (SEC) oder Carboxymethylsulfoethylcellulose (CMSEC) nach einem Slurryverfahren bis zu einem Gesamtsubstitutionsgrad von ca. 0,7 bis ca. 0,95.

2. Mahlung der so erhaltenen CMC, SEC oder CMSEC nach Reinigung und Trocknung zu einem Siebspektrum $\leq 2{,}0$ mm.

3. Weiterveretherung der CMC, SEC oder CMSEC in einem weiteren Veretherungsprozeß (z.B. Semi-dry-, Slurryverfahren) zu einer CMSEC mit einem Gesamtsubstitutionsgrad von 1,4 bis 2,2, speziell 1,5 bis 2,1.

4. Trocknung der nach den Punkten 1 bis 3 erhaltenen CMSEC mit oder ohne vorherige teilweise oder vollständige Abtrennung der Reaktionsnebenprodukte. Anschließend Konfektionierung in üblicher und bekannter Weise.

Eine nach dem erfindungsgemäßen Verfahren hergestellte hochsubstituierte CMSEC ist als Verdickungsmittel bzw. Rheologieverbesserer im Textildruck geeignet und stellt eine Alternative zu Alginat- und CMC-Verdickungsmitteln dar. Der Vorteil der nach dem erfindungsgemäßen Verfahren hergestellten CMSEC ist in einem minimalen Reagenzaufwand (hohe Ausbeute bei geringerem Gesamtsubstitutionsgrad), einem hohen Aktivgehalt durch Reinigung nach der ersten Reaktionsstufe und insgesamt einem gegenüber dem Stand der Technik vereinfachten Herstellungsverfahren zu sehen.

In den nachfolgend aufgeführten Beispielen wird das erfindungsgemäß beanspruchte Verfahren zur Herstellung einer CMSEC und die Verwendung ebensolcher Produkte als Verdickungsmittel im Textildruck näher erläutert.

Die Produkte werden, wie unten angegeben, durch ihre Viskosität, ihren Substitutionsgrad, ihren wasserlöslichen Anteil und ihre Transmission charakterisiert. Die Viskositäten werden mit einem Rotationsviskosimeter (Haake) Typ RV 100, System M 500, Meßeinrichtung MV, nach DIN 53 019, bei einer Schergeschwindigkeit von $D = 2{,}5 \ s^{-1}$ (T = 20°C) bestimmt. Die Bestimmung des Carboxymethylsubstitutionsgrades erfolgt nach ASTM-D 1439-83 a / Methode B. Die Ermittlung des Substitutionsgrades durch Sulfoethylgruppen erfolgt durch Titration mit Bariumperchlorat gegen Thorin nach Ehrenberger/Gorbach (Ehrenberger/Gorbach: Methoden der organischen Elementar- und Spurenanalyse, Verlag Chemie, Weinheim, 1973, S. 223). Der Aufschluß hierfür wird nach Schöninger vorgenommen (Heraeus-Druckschrift EW-F 1.6.1 [Methode 1]). Die Transmission der Lösungen wird mit einem Hitachi-Spektralphotometer, Modell 101, Hitachi Ltd., Tokio/Japan, in einer Glasküvette mit 10mm optischer Weglänge ($\lambda = 550$nm), 2 gew.-%ige Lösung in dest. Wasser) ermittelt.

Die erfindungsgemäß hergestellten Carboxymethylsulfoethylcellulosen werden als Druckpasten-Grundlagen im Textildruck eingesetzt. Sie werden dabei vorzugsweise allein, können aber auch im Gemisch mit anderen im Textildruck üblichen natürlichen oder halbsynthetischen Druckpasten-Grundlagen, wie z.B. Natriumalginat, Stärke, modifizierten Stärken, Guar, Johannisbrotkemmehl, Gummiarabikum, Kristallgummi, Traganth-Gummi, Tamarinde und/oder Celluloseethern, insbesondere Carboxymethylcelluloseethern bekannter Gütequalität oder vollsynthetischen Verdickungsmitteln, wie z.B. Polymerisatverdickern eingesetzt werden, wobei die Menge der erfindungsgemäß beanspruchten CMSEC im Gemisch nicht unter 10 % liegen sollte, da sonst der erfindungsgemäße Vorteil (Salz-, pH-Stabilität, Druckqualität u.a.) nicht zum Tragen kommt.

Als Textilmaterialien können synthetische Fasern, Naturfasern, Mischgewebe oder Celluloseregenerat verwendet werden. Als Farbstoffe werden z.B. Oxidations-, Schwefel-, Entwicklungs-, Woll-, Chromierungs-, Direkt-, Säure-, Dispersion-, Naphthol-, Küpen-, Metallkomplexfarbstoffe, Pigmente oder Handelsprodukte aus einer Mischung einer Kupplungskomponente von Entwicklungsfarbstoffen und einer Diazoaminoverbindung, insbesondere jedoch Reaktivfarbstoffe verwendet.

Die Transmissionswerte der in den Beispielen erwähnten Carboxymethylcellulosen bzw. Carboxymethylsulfoethylcellulosen liegen bei ≥ 96 %; der wasserlösliche Anteil liegt bei ≥ 99,9 %.

## Beispiele

### Beispiel 1

27,5 kg eines feingemahlenen Linterzellstoffes (Trockengehalt: 95 %) werden in einem thermostatisierbaren Reaktor unter Stickstoffatmosphäre in 605 l Isopropanol und 12 l Wasser suspendiert. Nach Zugabe von 16,3 kg Natriumhydroxid-Plätzchen und 44,3 kg einer 30 %igen Lösung von Natriumvinylsulfonat wird 80 min lang bei 20 bis 25°C alkalisiert. In 40 min wird auf 75°C erwärmt und die Reaktionstemperatur von 75°C 180 min lang gehalten. Anschließend wird auf 65°C abgekühlt und 24,1 kg einer 80 %igen Monochloressigsäure innerhalb von 20 Minuten eingegeben. In 20 Minuten wird auf 75°C erwärmt und weitere 120 Minuten bei dieser Temperatur verethert. Der Ansatz wird abgekühlt und über eine Zentrifuge abgetrennt. Das Produkt wird in 600 l 85 %igem Methanol aufgeschlämmt, in einer Zentrifuge mit 500 l Methanol salzfrei gewaschen, bei 70°C getrocknet und anschließend mit einer Schneidmühle gemahlen. Die Carboxymethyl-Sulfoethylcellulose besitzt einen Substitutionsgrad durch Carboxymethylgruppen von 0,75 und einen Substitutionsgrad durch Sulfoethylgruppen von 0,35. Die Viskosität des gereinigten Produktes liegt bei 5 740 mPa·s (2 gew.-%ige Lösung (Rotationsviskosimeter, Typ RV 100, System M 500, Meßeinrichtung MV nach DIN 53 019, $D = 2,5\ s^{-1}$, $T = 20°C$). Für die nachfolgende Umsetzung werden 14 kg der oben bezeichneten CMSEC (Trockengehalt: 93,6 %) zusammen mit 19,6 kg Isopropanol in einen Pflugscharmischer unter Stickstoffatmosphäre eingegeben. Unter Rühren werden 10,1 kg einer 50 %igen Lauge aufgedüst. Anschließend wird 80 Minuten bei ca. 25°C alkalisiert. 7,1 kg einer 80 %igen Monochloressigsäure werden aufgedüst. Innerhalb von 60 Minuten wird auf 75°C erwärmt und diese Temperatur 120 Minuten lang beibehalten. Der Ansatz wird bei 70°C getrocknet. Die Carboxymethyl-Sulfoethylcellulose besitzt einen Substitutionsgrad durch Carboxymethylgruppen von 1,40. Derjenige durch Sulfoethylgruppen liegt bei 0,32. Die Viskosität des gereinigten Produktes liegt bei 1 100 mPa·s. Die charakteristischen Kenndaten der CMSEC gehen aus Tabelle 1 hervor.

### Beispiel 2

290,5 Teile eines käuflich erhältlichen CMC-Pulvers (Walocel® CRT 30000 P [Trockengehalt 92,95 %]) werden in einem thermostatisierbaren Reaktor mit geeignetem Rührer unter Stickstoffatmosphäre in 2 193 Teilen Isopropanol, 75 Teilen Wasser und 192,8 Teilen einer 30,5 %igen, wäßrigen Lösung von Natriumvinylsulfonat dispergiert und 15 min lang gerührt. Nachfolgend werden 63,3 Teile Natriumhydroxid-Plätzchen hinzugegeben und 30 min bei 25 bis 30°C alkalisiert. In 30 min wird auf 75°C erwärmt und die Reaktionstemperatur von 75°C 150 min lang gehalten. Nach Abkühlen auf etwa 25 bis 30°C werden erneut 63,3 Teile Natriumhydroxid-Plätzchen eingegeben und weitere 30 min bei 25 bis 30°C alkalisiert. 189 Teile einer 80 %igen, wäßrigen Lösung von Monochloressigsäure werden unter Rühren zugetropft. In 30 min wird anschließend auf 75°C erwärmt und weitere 150 min bei 75°C verethert. Das Produkt wird vom Slurry abgetrennt und bei Raumteperatur getrocknet und gemahlen. Die CMSEC besitzt einen Substitutionsgrad durch Sulfoethylgruppen von 0,25 und einen Substitutionsgrad durch Carboxymethylgruppen von 1,58. Die Viskosität des Produktes liegt bei 4 300 mPa·s.

### Beispiel 3

137 Teile eines feingemahlenen, gebleichten, veredelten Linterzellstoffes (Trockengehalt: 94,8 %) werden in einem thermostatisierbaren Reaktor mit geeignetem Rührer unter Stickstoffatmosphäre in 2 193 Teilen Isopropanol, 136,5 Teilen einer 30,5 %igen, wäßrigen Lösung von Natriumvinylsulfonat und 108 Teilen Wasser dispergiert und 15 min lang gerührt. Danach werden 89,6 Teile Natriumhydroxid-Plätzchen zugegeben und 80 min bei 25 bis 30°C alkalisiert. In 30 min wird auf 75°C erwärmt und die Reaktionstemperatur von 75°C 150 min lang gehalten. 133 Teile einer 80 %igen, wäßrigen Lösung von Monochloressigsäure werden in der Hitze zugetropft. Nach weiteren 150 min bei 75°C wird auf 25 bis 30°C abgekühlt, das Produkt separiert und mit 70 %igem Methanol salzfrei gewaschen. Das Produkt wird bei Raumtemperatur getrocknet und gemahlen. Die so erhaltene CMSEC besitzt einen Substitutionsgrad durch Carboxymethylgruppen von 0,83. Die Viskosität des gereinigten Produktes liegt bei 5 900 mPa·s.

Die aus der ersten Stufe erhaltenen CMSEC wird für eine weitere Veretherung in einem thermostatisierbaren Reaktor mit geeignetem Rührer unter Stickstoffatmosphäre in 2 193 Teilen Isopropanol und 210 ml Wasser dispergiert und 15 min lang gerührt. Nach Zugabe von 73,5 Teilen Natriumhydroxid-Plätzchen wird 30 min lang bei 25 bis 30°C alkalisiert. Nach Zugabe von 109,1 Teilen einer 80 %igen, wäßrigen Lösung von Monochloressigsäure wird innerhalb von 30 min auf 75°C erwärmt und die Reaktionstemperatur von 75°C 150 min lang gehalten. Nach Abkühlen auf Raumtemperatur wird das Produkt separiert. Die CMSEC wird bei Raumtemperatur getrocknet und gemahlen. Das Produkt weist einen Substitutionsgrad durch Sulfoethylgruppen von 0,25 und einen Carboxymethylsubstitutionsgrad von 1,42 auf. Die Viskosität des gereinigten Produktes leigt bei 1 900 mPa·s. Die charakteristischen Kenndaten der CMSEC gehen aus Tabelle 1 hervor.

**Beispiel 4**

127 Teile eines feingemahlenen, gebleichten, veredelten Linterszellstoffes werden in einem thermostatisierbaren Reaktor mit geeignetem Rührer unter Stickstoffatmosphäre in 2 193 Teilen Isopropanol dispergiert. Nach Zugabe von 88 Teilen Natriumhydroxid-Plätzchen in 210 Teilen Wasser wird 80 min lang bei 25 bis 30°C alkalisiert. 130 Teile einer 80 %igen, wäßrigen Lösung von Monochloressigsäure werden hinzugegeben. In 30 min wird auf 70°C erwärmt und diese Temperatur 120 min lang gehalten. In der Hitze werden sodann nochmals 88 Teile Natriumhydroxid-Plätzchen und nachfolgend kontinuierlich über einen Zeitraum von 120 min 130 Teile einer 80 %igen, wäßrigen Monochloressigsäure hinzugegeben. Die Veretherung wird anschließend bei 70°C während weiterer 120 min vorgenommen. Das Produkt wird separiert und durch Waschen mit 70 %igem Methanol von Reaktionsnebenprodukten befreit. Die CMC wird bei Raumtemperatur getrocknet und gemahlen. Der Substitutionsgrad durch Carboxymethylgruppen liegt bei 1,73. Die Viskosität des gereinigten Produktes beträgt 19 000 mPa·s.

Um die Auflösbarkeit des Verdickungsmittels beim Bedrucken des Textilmaterials zu verbessern, empfiehlt es sich, die Produkte vor ihrem Einsatz zu mahlen und auf eine Sieblinie von 100 % ≤0,5, insbesondere ≤0,4, speziell ≤0,35 mm einzustellen. Das nach der ersten und gegebenenfalls zweiten Stufe vorzunehmende Zerkleinerungsverfahren wird als Trocken- oder als Naßvermahlung durchgeführt. Als Mühlentypen können Walzen-, Kugel-, Schlag- und Schleuder-, Strahl- oder Schwingmühlen u.a. verwendet werden.

Die nach dem erfindungsgemäßen Verfahren hergestellten, nach dem weiter unten beschriebenen Maßverfahren charakterisierten gel- und faserfreien Cellulosederivate zeichnen sich durch ausgezeichnete Lösungsqualitäten aus und können als Dispergier-, Binde- oder Verdickungsmittel bzw. als Rheologieverbesserer in der Textilindustrie, insbesondere im Textildruck, eingesetzt werden. Die Cellulosemischether weisen ausgezeichnete Qualitäten auf und sind sowohl als gereinigte, teilgereinigte wie auch ungereinigte (technische) Produkte gelkörper- und faserfrei in Wasser löslich, besitzen Viskositäten von 10 bis 50 000 mPa·s (Rotationsviskosimeter gemessen als 2 gew.-%ige wäßrige Lösung bei einem Schergefälle von $D = 2,5 \ s^{-1}$ bei 20°C) und weisen Transmissionswerte von mehr als 95 %, insbesondere mehr als 96 % auf (gemessen an einer 2 gew.-%igen wäßrigen in einer Küvette mit einer optischen Weglänge von 10 mm mit Licht der Wellenlänge $\lambda = 550$ nm). Der wasserlösliche Anteil liegt bei >99,9 %.

**Tabelle 1:** Kenndaten der hergestellten Carboxymethylcellulosederivate

| Bezeich-nung | NaCl [%] | Natrium-glykolat [%] | Viskosität[1] [%] [mPa·s] | | DS [2] erste Stufe | DS [2] zweite Stufe | Sieblinie nach erster Stufe [mm] |
|---|---|---|---|---|---|---|---|
| CMSEC 1 | 14,9 | - | 4 | 2930 | SE: 0,35 | SE: 0,32 | 100 % <0,315 |
| | < 1 | - | 2 | 1100 | CM: 0,75 | CM: 1,40 | 90 % <0,250 |
| | | | | | | | 50 % < 0,063 |
| CMSEC 2 | 16,6 | 8,5 | 4 | 11000 | SE: - | SE: 0,25 | 100 % <0,315 |
| | < 1 | < 1 | 2 | 4300 | CM: 0,97 | CM: 1,58 | 95 % <0,250 |
| | | | | | | | 40 % <0,063 |
| CMSEC 3 | 16,9 | 9,5 | 4 | 3100 | SE: 0,25 | SE: 0,25 | 100 % <0,315 |
| | < 1 | < 1 | 2 | 1900 | CM: 0,83 | CM: 1,42 | 95 % <0,250 |
| | | | | | | | 40 % <0,063 |
| CMC 4 | < 1 | < 1 | 2 | 19000 | CM: - | CM: 1,73 | - |

[1]   Viskosität, x%ige Lösung, Rotationsviskosimeter (Haake), Typ RV 100, System M 500, Meßeinrichtung MV, nach DIN 53 019, Schergeschwindigkeit $D = 2,5\ s^{-1}$ (T = 20°C).

[2]   Durchschnittlicher Substitutionsgrad durch Carboxymethylgruppen (CM) bzw. Sulfoethylgruppen (SE), siehe hierzu z.B. K.Balser, 4. Auflage, Band 9, Verlag Chemie, Weinheim, 1983, S. 192-212, DS-Bestimmung nach ASTM D-1439-83 a / Methode B (Carboxymethyl) bzw. Schöninger [1] und Ehrenberger, Gorbach [2] (Sulfoethyl).

[1] Schöninger: Firmenschrift Heraeus EW-F 1.6.1 (Methode Schwefel 1).

[2] Ehrenberger, Gorbach, Methoden der organischen Elementar- und Spurenanalyse, Weinheim, 1973, S. 223.

In den nachfolgend aufgeführten Beispielen ist die Wirkung verschiedener erfindungsgemäß eingesetzter Carboxymethyl-Sulfoethylcelluloseether als Verdickungsmittel im Textildruck einem handelsüblichen Natriumalginat (Lamitex M 5, Firma Protan/Norwegen) gegenübergestellt. Verglichen wurde Natriumalginat als 6 %ige Lösung mit ungereinigten, d.h. technischen CMSECs bzw. einer gereinigten Carboxymethylcellulose (CMC 4 [Vergleichsprobe]). Die Produkte wurden alle isoviskos auf Viskositäten der wäßrigen Lösung von ca. 30 000 mPa·s eingestellt [Brookfield RVS, Spindel 4,20 UpM].

Die Zusammensetzung der mit den Carboxymethyl-Sulfoethylcelluloseethern bzw. Carboxymethylcellulosen hergestellten Stammverdickungen ist in Tabelle 2 aufgeführt. Die Druckpasten erhält man durch Abmischung definierter Mengen der jeweiligen Stammverdickung (90 Teile) mit definierten Teilen des Farbstoffes (10 Teile) und destilliertem Wasser. Als Farbstoff wird ein handelsüblicher Reaktivfarbstoff (Cibacron Türkis PG 3® [40 %]) eingesetzt.

Tabelle 2:

| Zusammensetzung der Stammverdickungen | | | | | | | |
|---|---|---|---|---|---|---|---|
| Verdickungsbestandteile | | Stammverdickungen [1] | | | | | |
| | | A | B | C | D | E | F |
| Lamitex M5[2]) | 6 %ig | 550 | - | - | - | - | 275 |
| CMSEC 3 | 8,5 %ig | - | 500 | - | - | - | - |
| CMSEC 2 | 8 %ig | - | - | 500 | - | - | - |
| CMSEC 1 | 9 %ig | - | - | - | 500 | - | - |
| CMC 4 | 2,5 %ig | - | - | - | - | 700 | 350 |
| Lyoprint AP® [3]) | | 3 | 3 | 3 | 3 | 3 | 3 |
| Lyoprint RG® [4]) | | 10 | 10 | 10 | 10 | 10 | 10 |
| Harnstoff | | 180 | 180 | 180 | 180 | 180 | 180 |
| NaHCO$_3$ | | 25 | 25 | 25 | 25 | 25 | 25 |
| Permutit-Wasser | | 232 | 282 | 282 | 282 | 82 | 157 |
| Gesamtmenge | | 1.000 g | | | | | |

[1] Angaben in Gewichtsteilen

[2] Lamitex M5 enthält 5 g/kg Natriumhexametaphosphat (Calgon T) und 5 g/kg Formalin (37 %ig)

[3] Entschäumer; Fa. BASF/Ludwigshafen

[4] Oxidationsmittel; Fa. BASF/Ludwigshafen

Mit den Fertigdruckpasten werden Druckversuche mit Cotton-Schussatin (mercerisiert, gebleicht) als Substrat vorgenommen. Das Textilgut wird ca. 10 min bei 102 bis 105°C getrocknet (Sattdampf-Fixierung [Mathis-Trockner]) und durch Trockenhitze (Heißluft) fixiert (1 min bei 200°C, Mathis-Trockner). Der Auswaschprozeß erfolgt in drei Stufen:

a) gründliches, kaltes Spülen,

b) Behandlung in der Nähe der Koschtemperatur (10 min),

c) kaltes Spülen.

Für die Beurteilung von Stärke, Penetration, Nuance, Griff und Egalität wird eine 64-T-Schablone (Rechtecke) und eine Rakel mit einem Durchmesser von 8 mm eingesetzt (Magnetstufe 3, Geschwindigkeitsstufe 3) (Zimmer-Flachfilmdruck). Für die Beurteilung der Standschärfe wird eine 68-T-Textschablone und eine Rakel mit einem Durchmesser von 8 mm verwendet (Magnetstufe 3, Geschwindigkeitsstufe 3). Die Ergebnisse der Druckvorgänge gehen aus Tabelle 3 hervor.

EP 0 601 403 B1

Tabelle 3:

| Druckausfall/Vergleich mit Lamitex M5 (Nr. 1), Sattdampf-Fixierung | | | | | | | |
|---|---|---|---|---|---|---|---|
| Druck bzw. Druckpaste | Stammverdickung | Stärke [1] | Nuance [1] | Penetration | Egalität | Griff | Standschärfe |
| 1 | A | 100 % [2] | [2] | [2] | [2] | [2] | [2] |
| 2 | B | praktisch gleich | praktisch gleich | etwas - deutlich mehr | praktisch gleich | etwas besser | etwas - deutlich besser |
| 3 | C | 110 % | praktisch gleich | Spur - etwas mehr | praktisch gleich | etwas besser | etwas - deutlich besser |
| 4 | D | praktisch gleich | praktisch gleich | Spur mehr | praktisch gleich | deutlich - erheblich besser | deutlich - erheblich besser |
| 5 | E | praktisch gleich | praktisch gleich | deutlich mehr | praktisch gleich | etwas - deutlich schlechter | deutlich - erheblich besser |
| 6 | F | praktisch gleich | praktisch gleich | Spur - etwas mehr | praktisch gleich | etwas schlechter | etwas - deutlich besser |

[1] = farbmetrische Messung

[2] = Vergleich

Die in den Tabellen verwendeten Fachausdrücke sind dem Cellulose- bzw. Textildruckfachmann bekannt und bedürfen keiner weiteren Erklärung. Verwiesen sei in diesem Zusammenhang auf die Kapitel "Textildruck" und "Textilfärberei" in Ullmanns Enzyklopädie der Technischen Chemie, Band 22, Seite 565 ff und Seite 635 ff (Verlag Chemie, Weinheim, 1982).

Aus der nachfolgend aufgeführten Wertetabelle ist die Überlegenheit, der im Textildruck eingesetzten, erfindungsgemäß beanspruchten CMSEC klar erkennbar. Neben der literaturbekannten Elektrolyt- und pH-Stabilität (siehe z.B. US-PS 2,811,519, J 6 3182-301A und EP 0 319 865.A2) weisen die Produkte die unten angegebenen Vorteile auf.

Tabelle 4:

| Exemplarischer Vergleich zwischen herkömmlichen, im Textildruck eingesetzten Verdickungsmitteln und dem erfindungsgemäß beanspruchten Celluloseehtern | | | |
|---|---|---|---|
| Parameter | Alginat (Fa. Protan) | CMSEC 1 (Erfindung) | CMC 4 (Vergl.-Bsp.) |
| 1. Konservierung (Formaldehyd) | unbedingt erforderlich | nicht notwendig | nicht notwendig |
| 2. Scherstabilität | gut | gut | gut |
| 3. Egalität beim Druck | gut | gut | gut |
| 4. Standschärfe | gut | gut | gut |
| 5. Griff des bedruckten Substrates (Auswaschbarkeit) | gut | sehr gut | schlecht |
| 6. Penetration des Substrates | gut | gut | gut |
| 7. Nuance | gut | gut | gut |
| 8. Reproduzierbarkeit | schlecht | gut | gut |
| 9. Elektrolyt- und pH-Stabilität | schlecht | sehr gut | schlecht |

**Patentansprüche**

1. Verfahren zur Herstellung von Carboxymethylsulfoethylcellulose (CMSEC), gekennzeichnet durch folgende Verfahrensstufen:

   1. Veretherung von Cellulose zu einer Carboxymethylcellulose (CMC), Sulfoethylcellulose (SEC) oder Carboxymethylsulfoethylcellulose (CMSEC) mit entsprechenden Veretherungsmitteln nach einem Slurryverfahren bis zu einem Gesamtsubstitutionsgrad von ca. 0,7 bis ca. 0,95,

   2. Mahlung der so erhaltenen CMC, SEC oder CMSEC nach Reinigung und Trocknung zu einem Siebspektrum ≤ 2,0 mm,

   3. Weiterveretherung der CMC, SEC oder CMSEC in einem weiteren Veretherungsprozeß zu einer CMSEC mit einem Gesamtsubstitutionsgrad von 1,4 bis 2,2 und

   4. Trocknung der nach den Schritten 1 bis 3 erhaltenen CMSEC und gegebenenfalls Abtrennung von Reaktionsnebenprodukten.

2. Verfahren nach Anspruch 1, dadurch gekennzeichnet, daß nach der zweiten Stufe ein Reinigungsschritt zur vollständigen oder teilweisen Abtrennung der Reaktionsnebenprodukte nachgeschaltet wird.

**3.** Verwendung von Carboxymethylsulfoethylcellulose, hergestellt gemäß einem der Ansprüche 1 oder 2 als Verdikkungsmittel bzw. Rheologieverbesserer im Textildruck.

**4.** Verwendung gemäß Anspruch 3, dadurch gekennzeichnet, daß der Einsatz im Reaktiv-Textildruck erfolgt.

**5.** Verwendung gemäß Anspruch 3 oder 4, dadurch gekennzeichnet, daß die CMSEC im Gemisch mit Natriumalginat, Stärke, modifizierten Stärken, Guar, Johannisbrotkernmehl, Gummiarabikum, Kristallgummi, Traganath-Gummi, Tamarinde und/oder Celluloseethern, insbesondere Carboxymethylcelluloseethern bekannter Gütequalität, eingesetzt wird.

**6.** Verwendung gemäß einem der Ansprüche 3 bis 5, dadurch gekennzeichnet, daß als Textilmaterialien synthetische Fasern, Naturfasern, Mischgewebe oder Celluloseregenerat verwendet werden.

**7.** Verwendung gemäß einem der Ansprüche 3 bis 6, dadurch gekennzeichnet, daß als Farbstoffe, Oxidations-, Schwefel-, Entwicklungs-, Woll-Chromierungs-, Direkt-, Säure-, Dispersions, Naphthol-, Küpen-, Metallkomplexfarbstoffe, Pigmente oder Handelsprodukte aus einer Mischung einer Kupplungskomponente von Entwicklungsfarbstoffen und einer Diazoaminoverbindung, insbesondere Reaktivfarbstoffe verwendet werden.

**Claims**

**1.** Process for the preparation of carboxymethylsulphoethylcellulose (CMSEC), characterised by the following processing steps:

1. etherification of cellulose to form a carboxymethylcellulose (CMC), sulphoethylcellulose (SEC) or carboxymethylsulphoethylcellulose (CMSEC) using appropriate etherifying agents by a slurry process to a total degree of substitution of approximately 0.7 to approximately 0.95,

2. grinding of the CMC, SEC or CMSEC thus obtained, after purification and drying to a screen size of $\leq 2.0$ mm,

3. further etherification of the CMC, SEC or CMSEC in a further etherification process to form a CMSEC having a total degree of substitution of 1.4 to 2.2 and

4. drying of the CMSEC obtained by steps 1 to 3 and optional separation of by-products of the reaction.

**2.** Process according to claim 1, characterised in that the second step is followed by a purification step in order completely or partly to separate the by-products of the reaction.

**3.** The use of carboxymethylsulphoethylcellulose, prepared according to either of claims 1 or 2, as a thickener or flow-promoter in textile printing.

**4.** The use according to claim 3, characterised in that the said use is in reactive textile printing.

**5.** The use according to claim 3 or 4, characterised in that CMSEC is used in a mixture with sodium alginate, starch, modified starches, guar, carob seed flour, gum arabic, starch gum, tragacanth gum, tamarind and/or cellulose ethers, in particular carboxymethylcellulose ethers of known quality.

**6.** The use according to one of claims 3 to 5, characterised in that synthetic fibres, natural fibres, blended fabrics or regenerated cellulose are used as the textile materials.

**7.** The use according to one of claims 3 to 6, characterised in that the dyes used are oxidation dyes, sulphur dyes, developed dyes, wool dyes, chrome dyes, direct dyes, acid dyes, dispersion dyes, naphthol dyes, vat dyes, metal complex dyes, pigments or commercial products comprising a mixture of a coupling component of developed dyes and a diazoamino compound, but in particular reactive dyes.

**Revendications**

1. Procédé pour la préparation d'une carboxyméthylsulfoéthylcellulose (CMSEC), qui se caractérise par les stades opératoires suivants :

   1. éthérification de la cellulose en une carboxyméthylcellulose (CMC), une sulfoéthylcellulose (SEC) ou une carboxyméthylsulfoéthylcellulose (CMSEC) à l'aide des agents éthérifiants appropriés par une opération sur bouillie jusqu'à un degré de substitution global d'environ 0,7 à 0,95,
   2. broyage de la CMC, SEC ou CMSEC ainsi obtenue, après purification et séchage, jusqu'à une dimension de particule inférieure ou égale à 2,0 mm au tamisage,
   3. éthérification complémentaire de la CMC, SEC ou CMSEC dans une nouvelle opération d'éthérification, donnant une CMSEC à un degré de substitution global de 1,4 à 2,2, et
   4. séchage de la CMSEC obtenue selon 1 à 3 ci-dessus et le cas échéant séparation des produits d'accompagnement.

2. Procédé selon la revendication 1, caractérisé en ce que, après le deuxième stade opératoire, on procède à une purification pour élimination complète ou partielle des produits d'accompagnement.

3. Utilisation de la carboxyméthylsulfoéthylcellulose préparée selon l'une des revendications 1 ou 2 en tant qu'agent épaississant améliorant les propriétés rhéologiques à l'impression textile.

4. Utilisation selon la revendication 3, caractérisée en ce qu'il s'agit d'une impression textile par colorant réactif.

5. Utilisation selon la revendication 3 ou 4, caractérisée en ce que la CMSEC est mise en oeuvre en mélange avec de l'alginate de sodium, de l'amidon, un amidon modifié, de la gomme guar, de la gomme de caroube, de la gomme arabique, de la gomme cristal, de la gomme adragante, du tamarin et/ou des éthers cellulosiques, en particulier des carboxyméthylcelluloses de qualité connue.

6. Utilisation selon l'une des revendications 3 à 5, caractérisée en ce que l'on utilise des matières textiles consistant en fibres synthétiques, fibres naturelles, tissus mélangés ou cellulose régénérée.

7. Utilisation selon l'une des revendications 3 à 6, caractérisée en ce que l'on utilise en tant que colorants des colorants par oxydation, des colorants au soufre, des colorants à développer, des colorants à chromer pour laine, des colorants directs, des colorants acides, des colorants dispersés, des colorants de naphtol, des colorants de cuve, des colorants complexes métalliques, des pigments ou des produits commerciaux consistant en un mélange d'un copulant de colorant à développer et un dérivé diazoaminé mais plus spécialement des colorants réactifs.